Europäisches Patentamt

European Patent Office

Office européen des brevets

(11) Publication number: **0 162 511**
**B1**

## EUROPEAN PATENT SPECIFICATION

(45) Date of publication of patent specification: **07.12.88**

(21) Application number: **85200663.4**

(22) Date of filing: **26.04.85**

(51) Int. Cl.⁴: **B 60 G 11/26,** B 60 G 3/14, B 62 D 13/02

(54) **Vehicle comprising an independently air suspended axle assembly, and axle assembly.**

(30) Priority: **18.05.84 NL 8401613**

(43) Date of publication of application:
**27.11.85 Bulletin 85/48**

(45) Publication of the grant of the patent:
**07.12.88 Bulletin 88/49**

(84) Designated Contracting States:
**AT BE CH DE FR GB IT LI LU NL SE**

(56) References cited:
**EP-A-0 043 626**
**DE-A-1 630 664**
**DE-A-3 031 353**
**DE-U-1 737 686**
**FR-A- 825 247**
**FR-A-1 175 011**
**FR-A-2 150 398**
**GB-A- 819 223**
**NL-A-7 612 924**
**NL-A-7 805 646**
**US-A-2 554 261**
**US-A-2 597 122**
**US-A-2 631 842**

(73) Proprietor: **Welgro B.V.**
**Parallelweg 18**
**NL-7141 DC Groenlo (NL)**

(72) Inventor: **Wellink, Theodorus Antonius**
**1, Hobbemastraat**
**NL-7141 XD Groenlo (NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage (NL)**

Courier Press, Leamington Spa, England.

## Description

The invention relates to a freight vehicle comprising a chassis and at least one axle sub-construction connected to said chassis, the said construction comprising an auxiliary frame being coupled to said vehicle chassis and comprising two independent longitudinal supporting arms, each connected for pivoting with said cross beam through supporting arms and bearing, said arms extending rearwardly of said beam and bearing wheels and said arms being supported by air springs.

Such an axle sub-construction is known under the trade name INDEAR. The cross beam has a heavy and sizeable form for good transmission of the forces acting upon the wheels to the chassis. The length of the cross beam and therefore the distance between the outermost points of supporting arm bearings corresponds approximately to the distance between the chassis beams of the vehicle. The longitudinal supporting arms thereby remain on the inner side of the wheels.

The invention has for its object to provide a freight vehicle of the type described in the preamble whereby, while preserving the favourable driving characteristics resulting from the independently air sprung wheel suspension, the axle sub-construction can be given a light form, while the freight vehicle can still be given the structure of a bulk tank truck having a large carrying capacity per running metre.

This is achieved according to the invention in that the cross beam and the supporting arm bearings extend transversely in front of the wheels and overlap the wheels in a transverse direction; that as seen above, the longitudinal supporting arms are T-shaped with said supporting arm bearings on said cross beam; that said cross beam is attached to the auxiliary frame of the sub-construction by means of supports arranged on the ends of said cross beam and extending upwards from said cross beam to said auxiliary frame on said cross beam, supports and auxiliary frame defining a space therebetween; that the auxiliary frame is coupled with the vehicle chassis via a rotary crown; that a discharge funnel extends through said rotary crown and is connected to a piece of a discharge conduit located underneath the rotary crown at a level which substantially corresponds with the level of the wheel axles; and that said discharge conduit extends through said space.

Because of the T-shape of the longitudinal supporting arms with the supporting arm bearings on the cross piece the supporting arm bearings are loaded more favourably and more space is obtained between the wheels, which is particularly favourable especially for tank trucks as a discharge funnel of the tank can extend into the axle sub-construction, resulting in the lowering of the centre of gravity of the tank truck. The cross beam forms together with the supports and the auxiliary frame a spatial construction which by its very nature can easily be structured sufficiently rigidly when its elements are of small dimensions. As a result of the frame-like construction of auxiliary frame and cross beam with supports, enough free space is created for feeding the common discharge conduit through the axle sub-construction to diverse discharge funnels. The axle sub-construction can swivel relative to the vehicle chassis over the required large angle of pivot without coming into collision with the discharge conduit.

It is noted that from the GB—A—819.223 and the DE—U—1.737.686 a freight vehicle with an independent wheel suspension is known whereby the wheels are each supported by longitudinal supporting arms supported by an air spring, these arms having supporting arm bearings which extend sideways to in front of the wheels. The wheel suspensions are, however, here integrated with a loading floor construction and a chassis respectively and do not form a part of a separate axle sub-construction which is coupled by means of its own auxiliary frame with the chassis of the vehicle.

Known from the US—A—2.554.261 is a passenger vehicle with an independent vehicle wheel suspension having a wheel supporting arm that is T-shaped as seen from above. The wheel suspension is here also fully integrated with the vehicle chassis and a separate axle sub-construction is not employed.

Known from the DE—A—1630650 is a freight vehicle whereby an axle sub-construction has a cross beam which is coupled to the chassis by means of two supports positioned at an interval from each other and extending in vertical longitudinal planes, as well as by means of a support extending in a vertical transverse plane. The three supports referred to together form a robust, compact welded unit, on the underside of which the cross beam is fixed by welding. Arranged on the bottom of the cross beam, which extends in transverse direction to in front of the wheels, are bearings for connecting T-shaped supporting arms for pivoting with the beam.

The cross beam is located at considerably higher level than the wheel axles. There is no free space which could allow passage of a discharge conduit. An auxiliary frame is not employed, but the above mentioned cross beam support assembled as a welded unit is attached directly to the chassis.

Known from the NL—A—7805646 is a bulk vehicle provided with a pneumatic discharge system. Here there is a common discharge conduit for multiple compartments above the axle sub-construction, that is, positioned above the auxiliary frame and its rotary crown. As a result the level of the bottom end of the discharge funnel lies considerably higher than is the case with the vehicle according to the current application. Known from a brochure D6012-1 of the Metaalcompagnie Brabant B.V. of Eindhoven, dated 1-2-1974, entitled "Heavy Coach Building" is a BPW air sprung axle set whereby longitudinal supporting arms are mounted for pivoting on consoles which extend downwards from an auxiliary frame that is to be coupled to the vehicle. The bottom ends of the consoles are here not joined to each other by a cross beam. Both wheels are hereby arranged on a common, continuous axle which ensures rigid coupling of the wheels to each other.

Known from the EP—A—0043626 is a freight vehicle for transporting bulk material, whereby a discharge funnel extends through a rotary crown of a bogie.

When the supporting arm bearings are arranged on the rear side of the cross beam, the center of gravity can be laid at a lower level.

It is per se known that an auxiliary frame together with a cross beam and supports arranged between them form a frame construction through which a discharge conduit extends. The bottom end of the discharge funnel and the piece of the discharge conduit situated on the underside of the discharge funnel and connecting onto it are thereby located at a level lying considerably above the axle of the pair of wheels, so that the centre of gravity of the load is still high and the per running metre of vehicle length inside the free space profile of bulk volume for transportation is comparatively small.

The invention also relates to and provides an axle assembly apparently intended for a vehicle according to the invention as previously described. The axle assembly can be manufactured in the known manner as a substantially separate construction part.

The invention will be described more fully in the following with reference to the examples shown in the Figures.

Fig. 1 shows a schematic side view of a vehicle in accordance with the invention.

Fig. 2 shows a partially broken away perspective view of the axle assembly of the vehicle in Fig. 1.

Fig. 3 is a simplified front view of the axle assembly in Fig. 2 according to arrow III therein.

Fig. 4 shows a front view corresponding to Fig. 3, of another embodiment of an axle assembly according to the invention.

Fig. 5 shows a section according to line V—V.

The vehicle 1 according to the invention comprises a tractor 2 and a bulk semi-trailer 3 drawn by it. The tractor 2 and semi-trailer 3 are pivotally coupled by a coupling 11. The semi-trailer 3 is supported at the rear by two axle assemblies 5, 6. The rear axle assembly 5 is coupled pivotally on a vertical axis with the semi-trailer 3, and the axle assembly 6 has a fixed connection with the trailer 3. The latter has a self-supporting construction, so that the chassis is integrated in it. The bogie 5 is connected with a feed funnel 4 and is pivotable around the axis of symmetry of this feed funnel 4. The frame of the fixed axle assembly 6 is made such that it extends around an intermediate feed funnel 13, and is additionally supported by an auxiliary construction 14.

The rotatable axle assembly 5 is provided with steering arms 7 projecting sideways to a point above the wheels, which arms are connected by means of steering rods extending in longitudinal direction to a steering arm 9 which is mounted under the trailer at the forward end. The steering arm 9 has an engaging arm 10 which engages a fixed point of the tractor 2 near the coupling 11. This construction achieves that, when the tractor 2 is at an angle in relation to the trailer 3, in driving through a curve, the steered axle assembly 5 is pivoted such that its position is adjusted to the curve. The steering construction of the bogie 5 is known as such and does not form subject of the present application.

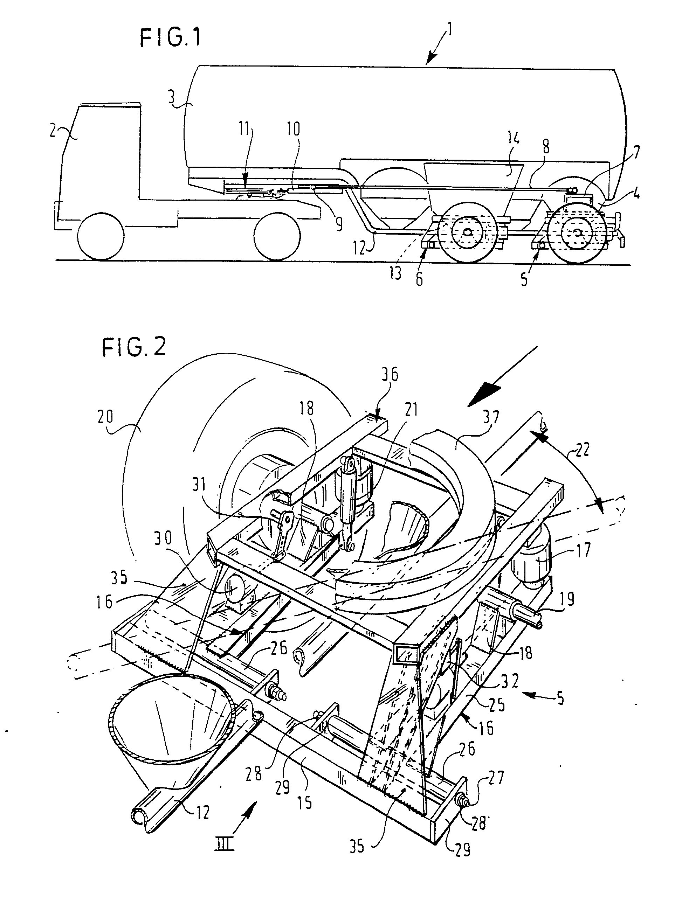

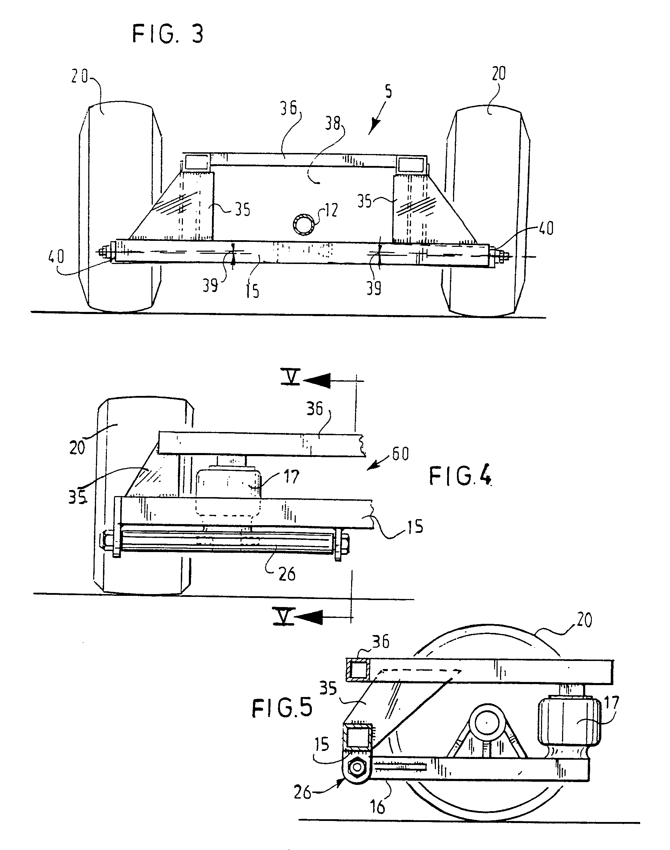

As is shown in Fig. 2, the axle assembly 5, which in principle corresponds to the assembly 6, comprises a transverse beam 15 and two longitudinal supporting arms 16, each connected to the transverse beam 15 by supporting arm bearings 26, extending to the rear of the beam, bearing a wheel 20 and being supported by an air spring 17. According to the invention, the transverse beam 15 and the supporting arm bearings 26 extend sideways to a point in front of the wheels 20. This is rather clearly seen in Fig. 3.

In the particular embodiment of the axle assembly 5 according to the invention as shown, the supporting arm bearings 26 are arranged on the rear side of the transverse beam 15, and the latter is attached by supports 35 to a connecting part of the axle assembly, in the form of a subframe 36, connected to the vehicle chassis. As can be seen in Fig. 3, this results in a free space 38 between the wheels of a very considerable height, so that the bulk conduit 12 of the bulk trailer 3 can extend unobstructed through this free space 38 at the very low height corresponding to the level of the axis of rotation of the wheels.

The axle assembly 5 is very suitable as bogie because of the outward location of the supporting arm bearings 26, while a bulk conduit 12 can still extend through the free space in the axle assembly. The attainable pivot angle is indicated by arrow 22.

The supporting arms 16 are in top view T-shaped. The supporting arm bearing is located on the cross piece. The part of the supporting arms 16 which extends in longitudinal direction is formed by a straight box-girder 25. On the upper face of the box-girder 25 a wheel axle support 18 is mounted, bearing the wheel axle 19, having attached to it by means of bearings, a wheel 20. As a result of this construction, there is sufficient space available between the supporting arm 16 and the subframe 36 for mounting the brake air cylinder 30 on the supporting arm 16. This brake air cylinder operates the brake arm 31 of the wheel brake in known manner. Moreover, there is space available for the height control valve 32 of the air suspension. It can also be clearly seen in Fig. 2, that, as a result of this measure, the free space between the wheels is indeed entirely unobstructed. A shock absorber 21 is in each case attached between the supporting arm 16 and the subframe 36. In the embodiment shown, this shock absorber is mounted near the rear end of the supporting arm 16. Normally speaking, the absorber 21 will not form any obstruction in this position. Nevertheless, it is of course possible to mount the absorber 21 in another position.

The supporting arm bearings 26 comprise a bearing axle 27 which is mounted by nuts in supports that project backwards of the transverse beam 15. In the cross tube of the supporting arm 16 bearings which are supported by the axle 27 are fitted in the known manner.

As previously stated, the bogie 6 is made identical to the bogie 5, the bogie 6, however, being directly connected to the chassis of the semi-trailer 3, whereas the bogie 5 is connected to it by means of the rotatable crown 37. In Figs. 2 and 3 the steering arms 7 of the bogie are no longer shown.

Fig. 3 indicates that the wheel supporting arms 16 are mounted to the transverse beam 15 at a small angle 39, so that the wheels 20 obtain a positive wheel camber. The ends 40 of the transverse beam 15 of the axle assembly 5 extend sideways to a point past the centre of the wheels 20, as Fig. 3 also shows.

The wheel assembly 60 of Figs. 4 and 5 likewise comprises a transverse beam 61, on the underside of which the supporting arms 67 are pivotally mounted by means of the supporting arm bearings 64. Using supports 63 the transverse beam 61 is coupled with the subframe 66, which in turn is again connected to the vehicle. The air spring 65 supports on the rear end of the supporting arm 67. As a comparison of Fig. 4 with Fig. 3 shows, the supporting arm bearing 64 of the bogie 60 is mounted on the underside of the transverse beam 61, while the supporting arm bearing of the bogie 5 is situated on the rear side. The axle assembly 60 can be used in those cases where the free access to the space between the wheels 62 in the axle assembly 60 only needs to be of limited height. In that case, the supports 63 can be made lighter.

## Claims

1. Freight vehicle (1) comprising a chassis (3) and at least one axle sub-construction (5) connected to said chassis (3), the said construction (5) comprising an auxiliary frame (36) with a cross beam (15), said auxiliary frame (36) being coupled to said vehicle chassis (3) and comprising two independent longitudinal supporting arms (16), each connected for pivoting with said cross beam (15) through supporting arm bearings (28, 29), said arms (16) extending rearwardly of said beam (15) and bearing wheels (20) and said arms being supported by air springs (17), characterized in that cross beam (15) and the supporting arm bearings (26) extend transversely in front of the wheels and overlap the wheels in a transverse direction; that as seen from above, the longitudinal supporting arms (16, 55) are T-shaped with said supporting arm bearings (26) on said cross beam (15); that said cross beam (15) is attached to the auxiliary frame (36) of the sub-construction by means of supports (35) arranged to the ends of said cross beam (15) and extending upwards from said cross beam (15) to said auxiliary frame (36), said cross beam (15), supports (35) and auxiliary frame (36) defining a space therebetween; that the auxiliary frame (36) is coupled with the vehicle chassis via a rotary crown; that a discharge funnel extends through said rotary crown and is connected to a piece of a discharge conduit located underneath the rotary crown at a level which substantially corresponds with the level of the wheel axles; and that said discharge conduit (12) extends through said space.

2. Freight vehicle as claimed in claim 1, characterized in that the supporting arm bearings (26) are arranged on the rear side of the cross beam (15).

3. Axle sub-construction evidently intended for a freight vehicle as claimed in any of the foregoing claims.

## Patentansprüche

1. Frachtfahrzeug (1) mit einem Chassis (3) und mindestens einem mit dem Chassis (3) verbundenen Achsunteraufbau (5), wobei der Aufbau (5) einen Hilfsrahmen (36) mit einem Querträger (15) aufweist, der Hilfsrahmen (36) mit dem Fahrzeugchassis (3) verbunden ist und zwei unabhängige Längstragarme (16) aufweist, jeder zum Schwenken mit dem Querträger (15) durch tragende Armlager (28, 29) verbunden ist, sich die Arme (16) rückwärts von dem Träger (15) und den tragenden Rädern (20) erstrecken und die Arme von Luftfedern (17) getragen sind, dadurch gekennzeichnet, daß der Querträger (15) und die tragenden Armlager (26) sich quer vor den Rädern erstrecken und die Räder in einer Querrichtung überlappen, daß von oben gesehen die Längstragarme (16, 55) T-förmig mit den tragenden Armlagern (26) auf dem Querträger (15) gebildet sind, daß der Querträger (15) an dem Hilfsrahmen (36) des Unteraufbaus angebracht ist mit Hilfe von Trägern (35), die an den Enden des Querträgers (15) angeordnet sind und sich von dem Querträger (15) aufwärts zu dem Hilfsrahmen (36) erstrecken, wobei die Querträger (15), die Träger (35) und der Hilfsrahmen (36) einen Raum zwischen sich abgrenzen, daß der Hilfsrahmen (36) mit dem Fahrzeugchassis über einen Drehkranz verbunden ist, daß sich ein Entleerungstrichter durch den Drehkranz erstreckt und mit mindestens einem Stück einer Entleerungsleitung verbunden ist, die unterhalb des Drehkranzes auf einer Höhe angeordnet ist, die im wesentlichen der Höhe der Radachsen entspricht, und daß sich die Entleerungsleitung (12) durch den Raum erstreckt.

2. Frachtfahrzeug nach Anspruch 1, dadurch gekennzeichnet, daß die tragenden Armlager (26) auf der Hinterseite des Querträgers (15) angeordnet sind.

3. Achsunteraufbau, offensichtlich für ein Frachtfahrzeug nach einem der vorhergehenden Ansprüche gedacht.

## Revendications

1. Véhicule à fret (1) comprenant un châssis (3) et au moins une sous-structure d'essieu (5) reliée audit châssis (3), ladite structure 5 comprenant un bâti auxiliaire (36) à poutrelle transversale (15), ledit bâti auxiliaire (36) étant accouplé audit châssis de véhicule (3) et comprenant deux bras de support longitudinaux indépendants (16), reliés chacun à articulation à ladite poutrelle transversale (15) par l'intermédiaire de paliers de bras de support (28, 29), lesdits bras (16) s'étendant vers l'arrière de ladite poutrelle (15) et portant des roues (20) et lesdits bras étant supportés par des ressorts pneumatiques (17), caractérisé en ce que la traverse, 15 et les paliers de bras de support (26) s'étendent transversalement devant les roues et chevauchent les roues suivant la direction transversale, en ce que vus de dessus, les bras de support longitudinaux (16, 55) sont en T, lesdits paliers de bras de support (26) étant portés par ladite poutre transversale (15), en ce que que ladite poutre transversale (15) est fixée au bâti auxiliaire (36) de la sous-structure au moyen de supports (35) disposés sur les extrémités de ladite poutre transversale (15) et s'étendant vers le haut depuis celle-ci jusqu'audit bâti auxiliaire (36), ladite poutre transversale (15), lesdits supports (35) et ledit bâti auxiliaire (36) définissant entre aux un espace, en ce que le bâti auxiliaire (36) est accouplé avec le châssis du véhicule via une couronne rotative, en ce qu'un entonnoir de déchargement traverse ladite couronne rotative et est relié à un tronçon d'un conduit de déchargement situé au-dessous de la couronne rotative à un niveau qui correspond sensiblement au niveau des essieux de roues, et en ce que ledit conduit de déchargement (12) traverse ledit espace.

2. Véhicule à fret selon la revendication 1, caractérisé en ce que les paliers de bras de support (26) sont disposés du côté arrière de la poutrelle transversale (15).

3. Sous-structure d'essieu notamment destinée à un véhicule à fret selon l'une quelconque des revendications précédentes.

FIG.1

FIG.2

FIG. 3

V

FIG.4

V

FIG.5

2